# EUROPEAN PATENT SPECIFICATION

(11) **EP 3 158 771 B1**
(45) Date of publication and mention of the grant of the patent: **21.10.2020**
(21) Application number: 14736670.2
(22) Date of filing: 20.06.2014
(51) Int. Cl.: H04N 21/434, H04N 7/10, H04N 21/462, H04N 21/61, H04N 21/438

(54) **METHOD FOR THE TRANSMISSION AND RECEPTION OF DIGITAL TERRESTRIAL TELEVISION SIGNALS, SAID SIGNALS COMPRISING A PLURALITY OF RADIOTELEVISION PROGRAMS OR SERVICES RECEIVABLE THROUGH INTERNET BY A TELEVISION RECEIVER IN A CERTAIN FREQUENCY BAND**
VERFAHREN ZUM SENDEN UND EMPFANGEN VON DIGITALEN TERRESTRISCHEN FERNSEHSIGNALEN, BESAGTE SIGNALE MIT MEHREREN RADIOTELEVISIONSPROGRAMMEN ODER DIENSTEN, DIE ÜBER INTERNET VON EINEM FERNSEHEMPFÄNGER IN EINEM BESTIMMTEN FREQUENZBAND EMPFANGEN WERDEN KÖNNEN
PROCÉDÉ POUR LA TRANSMISSION ET LA RÉCEPTION DE SIGNAUX DE TÉLÉVISION NUMÉRIQUE TERRESTRE, LESDITS SIGNAUX COMPRENANT UNE PLURALITÉ DE PROGRAMMES OU SERVICES DE RADIOTÉLÉVISION POUVANT ÊTRE REÇUS PAR L'INTERMÉDIAIRE D'INTERNET PAR UN RÉCEPTEUR DE TÉLÉVISION DANS UNE CERTAINE BANDE DE FRÉQUENCES

(43) Date of publication of application: 26.04.2017
(73) Proprietor: Saronikos Trading and Services, Unipessoal Lda, 9000-48 Funchal, Madeira (PT)
(72) Inventor: JAMES, Robert, Hatfield, Hertfordshire, AL108HN (GB)
(74) Representative: Metroconsult Srl
(86) International application number: PCT/EP2014/063027
(87) International publication number: WO 2015/192912

(56) References cited:
- WO-A1-02/11451
- WO-A2-2007/122515
- US-A1- 2003 140 351
- US-A1- 2004 172 657
- US-A1- 2012 246 673
- JAN ROBIJNS ET AL: "Interference to cable television due to mobile usage in the Digital Dividend - Analysis", EMC EUROPE 2011 YORK, IEEE, 26 September 2011 (2011-09-26), pages 260-265, XP032020816, ISBN: 978-1-4577-1709-3

## Description

The present invention relates to the field of methods for the transmission and reception of digital terrestrial television signals and related apparatuses.

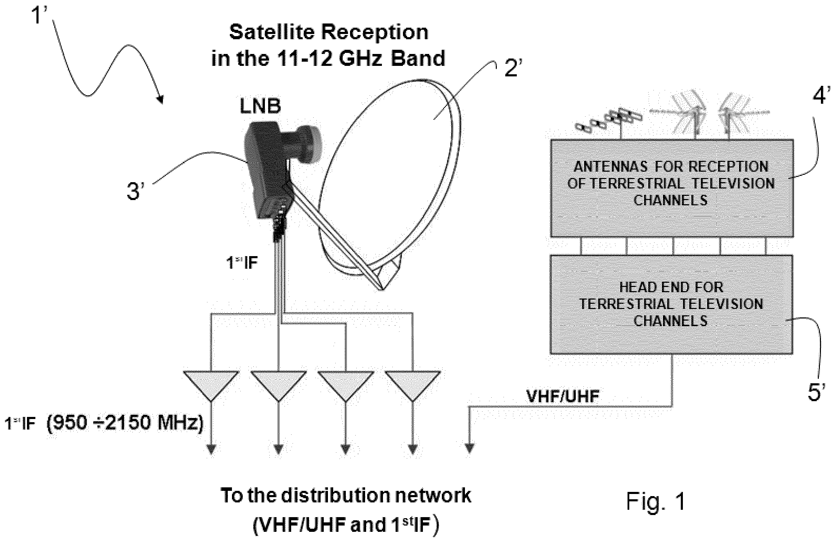

With reference to Figure 1, the reception and subsequent distribution inside a building of terrestrial and satellite broadcasted television channels up to now has been carried out by individual or communal type coaxial cable systems 1', using the same radio frequency channels with which radiotelevision signals are broadcasted (terrestrial broadcasting, VHF and UHF bands) or by converting radiotelevision signals received by satellite from the 11-12 GHz band, into the band of the first intermediate frequency (1^{st} IF: 950-2150 MHz), within which they can be distributed via cable without excessive attenuation.

Moreover, satellite type radiotelevision signals are received by a satellite antenna 2' associated with a Low Noise Block converter 3', or LNB, which moves in block the satellite radiotelevision signals to the first intermediate frequency 1^{st} IF, while the broadcasted terrestrial radiotelevision signals are received by an antenna 4' enabled to receive such signals that are then passed on to a terminal head 5' for terrestrial television channels.

The satellite and terrestrial radiotelevision signals are then distributed, by way of a coaxial cable distribution network, to user's plug sockets (usually named system outlets), to which apparatuses having a tuner for terrestrial broadcast bands (TV with integrated digital tuner or iDTV: "integrated Digital TeleVision" or set-top box) may be connected. It is appropriate here to take note that the reception by the individual user in an apartment building requires the use of suitable equipment, so-called multi-switch, to be installed, for example, in the apartment building's common floor-space, connected to the user's set-top box or TV set for tuning, demodulating and decoding the satellite signals.

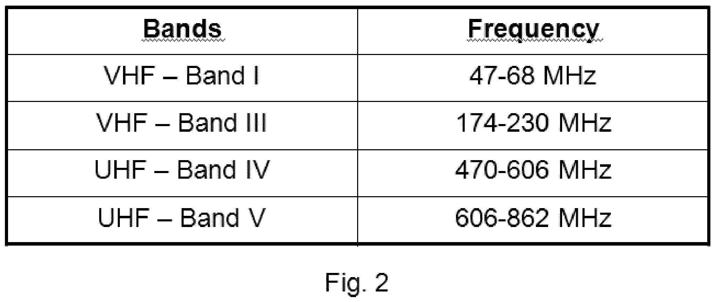

Television receivers, set-top boxes and iDTVs, are usually able to receive broadcasted terrestrial television signals (DVB-T/T2); the frequency bands from which they are able to tune are those shown in Figure 2, as determined nationally and internationally by competent bodies and authorities.

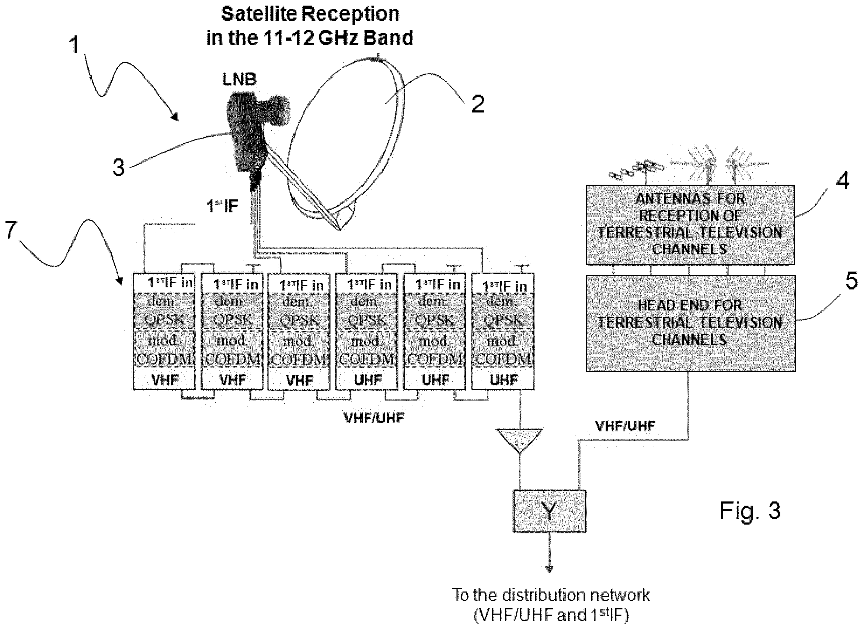

With reference to Figure 3 an additional example of a system 1 for receiving broadcasted terrestrial and satellite radiotelevision signals is illustrated, whose main characteristic is to make available to the system outlets all television channels, namely digital terrestrial broadcasts (DVB-T) and satellite channels (DVB-S), in the abovementioned VHF/UHF bands and with the COFDM modulation ("Coded Orthogonal Frequency - Division Multiplexing") typical of DVB-T (Digital Video Broadcasting-Terrestrial).

In fact, the radiotelevision signals received by the satellite antenna 2 with QPSK modulation, are conveyed to the low noise converter 3 and then trans-modulated, in the head-end 7 for satellite television channels, in the COFDM format typical of DVB-T, before being sent to the distribution network of the community television system together with other terrestrial television broadcasted signals.

This distribution technique is only feasible if the terrestrial broadcasts do not occupy all the available channels of the VHF/UHF bands, but leave an adequate number of channels free of signals. This requirement was, until recently, impossible to fulfill in some countries, where the VHF/UHF bands were filled almost completely by national and local television broadcasters.

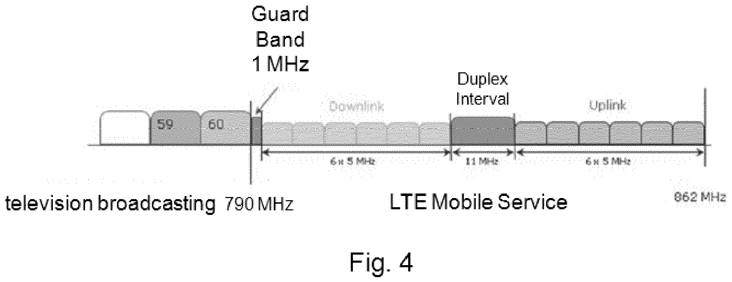

It has recently been established that the Band V (UHF) should be limited to 790 MHz, corresponding to the UHF channel 60, eliminating the digital terrestrial television service from 791 MHz to 862 MHz (800 MHz) and assigning said frequencies to the LTE mobile phone service, as represented in Figure 4. Therefore the frequencies from 791 MHz to 862 MHz are no longer part of the spectrum reserved for terrestrial digital video broadcasting (DVB-T) and it is therefore no longer possible to radiate television services in this frequency band, because such services would be heavily interfered and dominated by the mobile telephone signals (LTE), which, given their extensive network in both rural and urban areas, may have a level higher than those coming from a transmitter of digital terrestrial broadcasts. However, television receivers for digital terrestrial broadcasting (DVB-T) still have the ability to tune and demodulate television signals of digital terrestrial broadcasting (DVB-T) in the frequency band from 791 MHz to 862 MHz. This situation could continue for many years since the frequencies now assigned in certain countries to the LTE service in other countries are frequencies that, according to the ITU World Standard, will be always been reserved for broadcasting of radiotelevision signals, and it is not foreseeable that all countries will discontinue these frequencies in favour of mobile services. Therefore the manufacturers of television receivers will continue to produce apparatuses capable of receiving terrestrial television signals broadcasted also in the bands that in some countries may have already been discontinued.

It is also possible that in the future the upper limit of the available bandwidth for terrestrial television broadcasting will be further reduced, by eliminating the 700 MHz band.

Therefore, today, the UHF channels 61-69 have been discontinued from the terrestrial television broadcasting, which make up the 800 MHz band, i.e. nine radio frequency channels of 8 MHz bandwidth are lost for the digital television broadcasting. In the future the UHF channels 49-60 will also be discontinued, which are in the 700 MHz band, that is, twelve additional radiofrequency channels of 8 MHz bandwidth that will be lost for the terrestrial digital television broadcasting. Also in this case television signal receivers related to digital television broadcasting - terrestrial (DVB-T) will for many years be able to tune and demodulate television signals located in previously assigned bands for digital terrestrial broadcasting (DVB-T).

This reduction in the number of radio frequency channels available for terrestrial television broadcasting will significantly restrict the amount of television programs receivable by users. Since each terrestrial broadcasted TV channel with digital coding and modulation (DVB-T) contains at least six SD (standard definition) coded television programs (coordinated in a group called MUX or Multiplex DVB), the loss of nine channels (current) and a further twelve (in the future), for a total of twenty-one television channels, corresponds to the inability to transmit up to about one hundred and twenty different television programs.

The television services which are no more broadcast in the 800 MHz band (and in the future also in the 700 MHz band) could be delivered to the user via the Internet and could be received by a so-called "Smart TV", i.e. a television apparatus which may be connected to the Internet and may display video streams coming from the Internet. However, not every television apparatus is a "Smart TV" and, moreover, it is in practice difficult to connect such a television apparatus to the Internet since:
- the wideband plug socket might be physically far from the television apparatus;
- the WiFi network might not guarantee a sufficient quality of streaming, especially in terms of bandwidth;
- the user might not be skilled enough to arrange the connection between the television apparatus and the Internet.

WO20071122515A2 discloses a system and a method for converting IP video streams or other types of video signals into standard video inputs for legacy televisions. Specifically, such a system is capable of receiving a raw video signal in MPEG-2, re-encapsulate or otherwise translate the raw video signals, and transmit them on an RF cable as though they were part of a DVB-T or ATSC terrestrially broadcast channel.

US20040172657 discloses an integrated system for providing video and data services to a customer premises. Among other devices, the integrated system comprises also an integrated network interface device which can be conveniently configured through a web browser or a dedicated software on a PC communicating with the network interface device.

An object of the present invention is therefore to indicate a method and a system for the transmission and reception of digital terrestrial television signals, and related apparatuses, that overcome the drawbacks due to the assignment to mobile telephony services of a band previously assigned to terrestrial digital broadcasting.

A further object of the present invention is to indicate a method and a system for the transmission and reception of digital terrestrial television signals, and related apparatuses, which allow to maintain unchanged the number of radiotelevision programs, that can be received by a conventional television signal receiver of digital terrestrial broadcasts.

A further object of the present invention is to indicate a method and a system for the transmission and reception of digital terrestrial television signals, and related apparatuses, which do not require the replacement of the antenna system used for receiving said radiotelevision signals, but simply adapt and modify it.

A further object of the present invention is to indicate a method and a system for the transmission and reception of digital terrestrial television signals, and related apparatuses, that do not need to modify or replace the existing receivers of said radiotelevision signals, in order to make use of television services equal in number to those received before that part of the spectrum previously assigned to digital terrestrial broadcasting was instead assigned to mobile operators.

A further object of the present invention is to indicate a method and a system for the transmission and reception of digital terrestrial television signals, and related apparatuses, which allow allocating in a predetermined manner, by a broadcaster or by a user, the radiotelevision programs in the frequency band allocated to mobile services.

A further object of the present invention is to indicate a method and a system for the transmission and reception of digital terrestrial television signals, and related apparatuses, which allow for increasing the coverage of the digital terrestrial television signals receivable by a receiver of the known kind.

A further object of the present invention is to indicate a method and a system for the transmission and reception of digital terrestrial television signals, and related apparatuses, which comply with the standards relating to the use of frequencies and which do not require authorization from the authorities in charge of the allocation of broadcast frequencies for both television and telephone sets.

The invention also relates to a reception system, a transmitter of digital terrestrial television signals and a signal processing device used in said reception system.

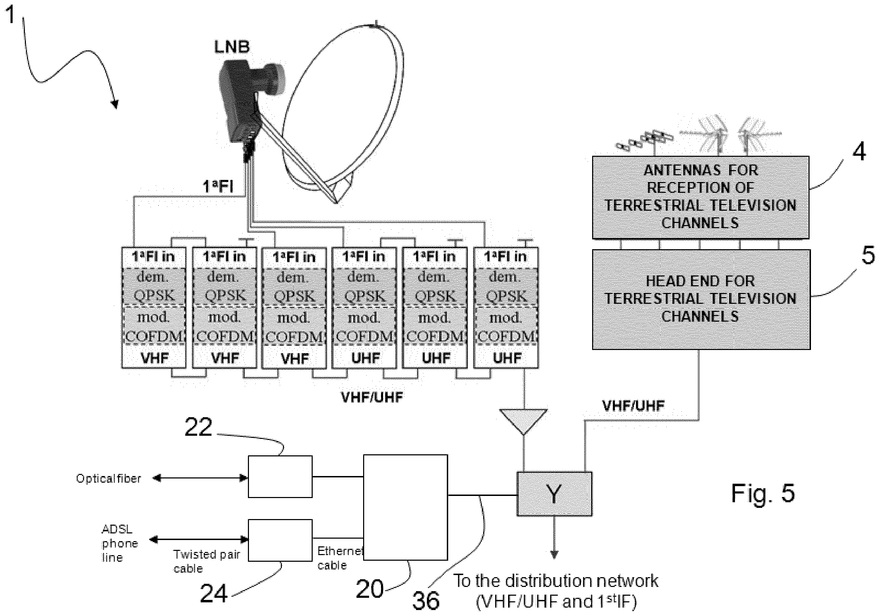

In summary, in order to limit the effects of the drastic reduction in certain countries of radiofrequency bands dedicated to terrestrial television broadcasting, the method and system of the present invention provides for transmitting radiotelevision programs, which can no longer find a location in the channels of the terrestrial broadcasted television, by means of the Internet, receiving them in the television antenna system 1 illustrated in Figure 5, subsequently converting them into the COFDM format and then distributing them in the radiofrequency channels that are certainly available in the cable system, as they are no longer used for terrestrial television broadcasting, because they are assigned to the LTE mobile service, i.e. in the channels of the 800 MHz band (UHF channels 61-69) and in the future in the channels of the 700 MHz band (UHF channels 49-60).

This opportunity is certainly feasible using the type of signal distribution system as illustrated in Figure 5, since the interference problems due to the LTE service in such frequency bands are resolved and guaranteed by the efficiency of the shielding of the cables and equipment that must meet the standards in force (EN 50083-2).

In fact, these rules allow for adequate immunity to electromagnetic fields due to the LTE service operating in these frequency bands.

The method and system, and related apparatus, of the present invention therefore allow to use the television channels discontinued for use by the terrestrial television broadcasting (61-69 UHF today and in the future 49-60 UHF) for the distribution via cable in an individual or community distribution system (master antenna system), as these signals are transmitted in the DVB-T standard (COFDM modulation), receivable by normal digital TV receivers (iDTV and set-top boxes for DTT: Digital Terrestrial Television), or in the DVB-T2 standard, planned for future television receivers and set-top boxes for DTT. This is possible thanks to the fact that the TV services that could not be any more allocated on the terrestrial broadcasting spectrum, are received through Internet at the individual or community distribution systems and converted to the DVB standards for the terrestrial TV broadcasting.

Therefore the user does not have to change or modify his TV receiver, as the modifications are made at the individual or community distribution system level.

The allocation of radiotelevision programs received by the Internet and inserted today in the UHF channels 61-69 can be carried out in a predetermined or different manner in each individual or community cable distribution system.

It is important to note that this technique achieves:
a) practically a 100% national coverage (being carried out by the Internet), not possible with a national terrestrial distribution network, which never has a total coverage;
b) that UHF channels 61-69, and in the future also the UHF channels 49-60, have no longer to be assigned by a body or a national authority, but are usable in a cable distribution system and are not suffering interference by interferences with the LTE service. As previously explained, the guarantee of non-interference is provided, for example, by the requirements of the Standard EN 50083-2, mandatory in Europe for equipment installed in cable distribution systems. Even the coaxial cable itself must provide a guarantee of adequate shielding: the requirement of shielding effectiveness of at least 75 dB (Class A), obtainable with good quality coaxial cables in the frequency band 700-800 MHz, is considered sufficient by the current Standards on cable distribution systems.

Further characteristics of the invention are object of the annexed claims which are considered an integral part of the present description.

The above objects will become more apparent from the detailed description of the method and system, and related apparatus, according to the present invention, with particular reference to the accompanying figures in which:
- Figures 1 and 3 show diagrams of reception systems of terrestrial and satellite radiotelevision signals of the known type;
- Figure 2 illustrates a table of frequency bands on which a receiver of terrestrial broadcasting television signals is able to carry out the tuning;

- Figure 4 shows the band usage of the LTE type mobile service;
- Figure 5 illustrates a block diagram of a reception system for terrestrial and satellite radiotelevision signals used in the method and in the receiving system according to the present invention;
- Figure 6 shows a signal processing device suitable to be incorporated in the receiving system of Figure 5.

The technical description and installations of the proposed inventive solution is clear from the operational description of the distribution technique via a coaxial cable in a individual or community distribution network as shown in Figure 5, bearing in mind that the channels in which the radiotelevision programs received by the Internet are distributed are those of the 800 MHz band (and in the future those of the 700 MHz band) assigned to the LTE service.

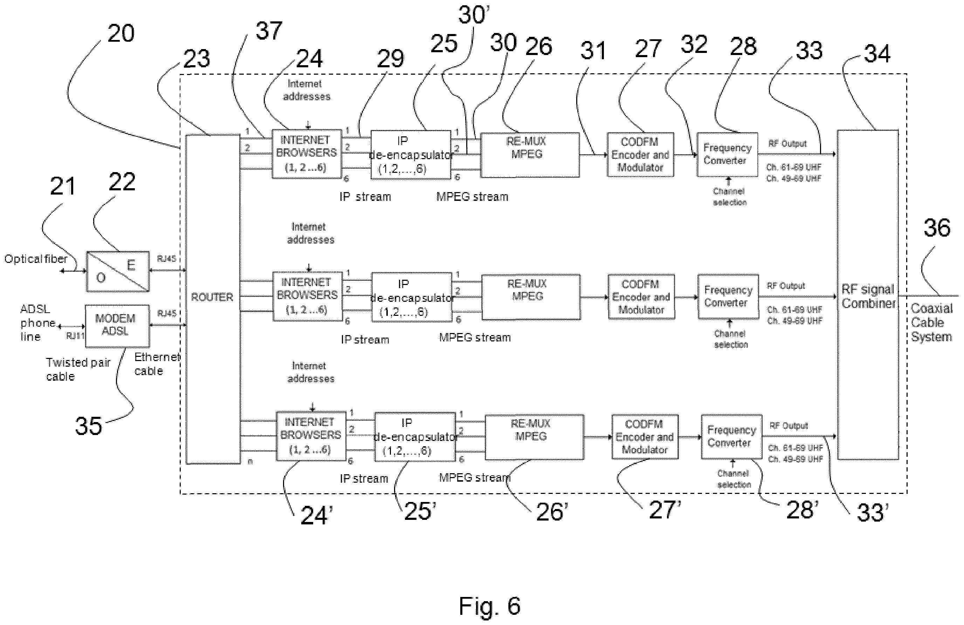

For example, with the current situation of channels previously assigned to terrestrial television broadcasting that are no longer in use, it would be possible to transmit television services via the Internet and, after their reception in the antenna system 1, convert each of them in the UHF channels 61-69 (with COFDM modulation typical of DVB-T or DVB-T2). This operation can be performed by a signal processing device 20 as shown in Figure 6.

With reference to the Figures 5 and 6, the signal processing device 20 is connected to Internet, in a preferred embodiment, via an optical fiber 21. An optical signal received from Internet is submitted to an opto-electronic converter 22 for converting it into an electronic signal which is fed to a router 23 via a suitable connector, e.g. an RJ45 cable. As an alternative or additionally, the signal processing device 20 is connected to Internet via an ADSL telephone line connected via a connector, e.g. a twisted pair cable and connector RJ11, to an ADSL modem 35 which, in turn, is connected to the router 23 via a suitable connector, e.g. an RJ45 cable. It is advisable that said connections to Internet allow an appropriate bit-rate, for instance 10-15 Mbit/s. However, it should be noted that, for distributing a plurality of radiotelevision programs or services, a much higher bit-rate could be necessary.

The router 23 allows subdividing the Internet signal into a suitable number of output signals 37 whose number depends on the number of radiotelevision programs or services which are requested to be simultaneously distributed to the users. For instance, in the present situation in which nine TV channels (from channel 60 to channel 69) have been assigned to LTE services and it is needed to use all these nine channels for the individual or community distribution it is necessary to make available fifty-four output signals. In fact, every TV channel can host up to six television services.

The signal processing device 20 comprises said router 23 and blocks 24 to 28 which allow transforming the signal coming from Internet and carrying a plurality of radiotelevision programs or services delivered by a broadcaster into a radio frequency signal suitable to be received and decoded by a conventional receiver of television signals.

More in particular, the signal 37 output from the router 23 is fed to a processing device 24 which is practically very similar to a Personal Computer. In fact, such processing device 24 is provided with at least one Internet browser which is able to select a desired IP address, so as to obtain a data stream related to a radiotelevision program selectable by a user. The browser can be operated remotely by means of a suitable software and, preferably, through an authentication password. The processing device 24 can preferably process up to six incoming data streams.

The selected data stream 29 in IP format is sent to an IP de-encapsulator block 25 which de-encapsulates the selected data stream in IP format and obtains an MPEG data stream 30 related to the associated radiotelevision program or service.

Such MPEG data stream 30 and other MPEG data streams 30', processed by the IP de-encapsulator block 25 as well, are then submitted to a multiplexer 26 which, by adding the necessary SI/PSI tables related to the data streams 30, 30', generates a Transport Stream 31 having a suitable bit-rate, e.g. 25-30 Mbit/s. The Transport Stream 31 should preferably contain no more than six data streams 30, 30'.

The Transport Stream 31 is then sent to a CODFM Encoder and Modulator block 27 which codes the Transport Stream 31 and modulates it so as to obtain a CODFM-modulated DVB-T/T2 signal 32.

The modulated DVB-T/T2 signal 32 is then frequency converted by a Frequency Converter block 28 in order to convert such signal 32 into one of the channels 61-69 UHF (or in the future 49-69 UHF) so as to obtain a radiofrequency signal 33. The signal processing device 20 further comprises a radiofrequency signal combiner block 34 which receives said radiofrequency signal 33 as well as all radiofrequency signals 33' coming from other chains of blocks 24' to 28', combines all said received radiofrequency signals 33, 33' and injects them into the coaxial cable distribution system 36 so as to distribute them to the users.

The Internet addresses to be provided to the browser of the device 24, in order to obtain the desired radiotelevision program, can be initially set up by the technician of the coaxial cable distribution system, so as to distribute the most important radiotelevision programs to the users. However, at least some part of the browsers could be left free in order to be directly addressed by the users via Internet by using a mobile phone, a smartphone or a tablet and a suitable password (possibly with fee). The latter case could be considered as a "second screen" application, i.e. an application introducing interactivity in the fruition of the radiotelevision programs or services through a second device, in particular a nomadic device (mobile phone, smartphone, tablet), provided with a small screen held in the user's hand while the user is watching TV. By means of a computer program product, loaded into a memory of the second screen device, the user can operate the browsers contained in the processing devices 24-24' which are not assigned to a fixed IP address in order to select the desired radiotelevision program or service.

When the user has finished watching the desired radiotelevision program or service, he should release the concerned browser so as to make it available for selecting further IP addresses or, in any case, for making it available to other users.

In case of a "pay per view" radiotelevision program, said release is less problematic as the browser is tuned onto the desired radiotelevision program only during the time which is necessary to watch the entire radiotelevision program and then the browser is automatically released. On the contrary, if the user is allowed to tune into a given radiotelevision program for an indefinite time (not to watch a specific radiotelevision program), and he selects another channel through the second screen device, said second screen device should send a release message to the browser. The computer program product loaded into the memory of the second screen device could also pop up a window on said second screen at fixed intervals by asking the user whether he has still interest in the current radiotelevision program. If the user answers negatively, or if he does not answer at all, the second screen device sends a release message to the browser. As the user might select a different channel by means of the television remote control, the browser should be in any case released after a predetermined time-out period.

The radiotelevision programs received via Internet and allocated into the UHF channels 61-69 (and in future into the UHF channels 49-69) can be set both in a predetermined way and in a flexible way thereby allowing the user, according to his request, to access to pre-recorded radiotelevision programs, e.g. through platforms of the "Ard Mediathek.de/" type (http://www.ardmediathek.de/tv), or "ZDF Mediathek" type (http://www.zdf.de/ZDFmediathek#/hauptnavigation/startseite) or to pay-per-view radiotelevision programs.

The distribution of the radiotelevision programs according to the present invention overcomes the problem of insufficient bit rate of the single user's wideband connection when using his "smart TV", by exploiting instead a community wideband connection having a higher bit rate; the cost is higher in absolute terms, but is lower with respect to a home wideband connection, being subdivided among several users.

Since television receivers (iDTV's and set-top boxes) capable of receiving the entire UHF band (up to channel 69) are still on the market, the user will be able to receive radiotelevision programs received by Internet, but converted (both in frequency and modulation) into the channels, for example 61-69 UHF, with COFDM modulation.

The proposed solution is advantageous inasmuch:
- allows for increasing the number of television channels distributed within an antenna installation, compared to those broadcast today with digital terrestrial broadcasting (DVB-T), enabling reception with normal television receivers which users already own;
- no authorization is required for the use of UHF channels 61-69 (UHF channels 49-69 in the future), by the competent authorities, as these channels are used only in private antenna distribution installations (domestic systems);
- allocation of the radiotelevision programs within the MUX contained in the UHF channels 61-69 (or in the future UHF 49-69) can be chosen either in a preset mode or at will, even on the basis of priority criteria established by the user; channel allocation is in fact established during the installation of the system by a technician, that takes into account the preferences of the user;
- allocation of the preferred radiotelevision programs of the user within a single multiplex can be chosen in such a way as to facilitating and reducing the switching time from one radiotelevision program to another (zapping). In fact, if zapping is carried out between two services contained in the same television multiplex, the switching time between one service and the other is less if compared with the case in which the two services are located in two different multiplexes.

The SI tables (Service Information), defined by the DVB, and PSI (Program Specific Information), defined by MPEG, are a set of digital information that describe the transmission channel where the services have to be transmitted, and are specified in ETSI EN 300 468. In the DVB terminology a service is a television network (e.g. ARD), while, in MPEG terminology, a television network is referred to as a program. There are numerous possible variants to the method and system for the transmission and reception of digital terrestrial television signals, and related transmitter, receiver system, and signal processing device described as an example, without for this departing from the principles of novelty inherent in the inventive idea, as it is also clear that in its practical forms of implementation the illustrated details may be different, and the same may be replaced with technically equivalent elements.

For instance, the router 23 could also be an independent device and not be part of the signal processing device 20.

Therefore it is easily understandable that the present invention is not limited to a method and system for the transmission and reception of digital terrestrial television signals, and related transmitter, receiver system, and signal processing device, but is subject to various modifications, improvements, substitution of equivalent parts and elements without however departing from the inventive idea, as is better clarified in the following claims.

## Claims

1. Method for receiving radiotelevision signals of the terrestrial digital broadcasting DVBT/T2 type on a DVBT/T2 receiver, said radiotelevision signals comprising a plurality of radiotelevision programs or services, said DVBT/T2 receiver being capable of receiving said radiotelevision signals in at least a frequency band from 606 MHz to 862 MHz, wherein at least a portion of said frequency band has been discontinued for the radiotelevision signals of the terrestrial digital broadcasting type and assigned to a mobile telephony service, said discontinued portion of said frequency band being from 791 MHz to 862 MHz, comprising the steps of:
- receiving Internet type signals containing said radiotelevision programs or services from which radiotelevision signals of the terrestrial digital broadcasting type are derived that are placed in television channels belonging to said portion of said frequency band;
- processing said Internet type signals (37) containing said radiotelevision programs or services by means of a signal processing device (20) that carries out the steps of:
- selecting IP addresses via a respective browser (24), so as to obtain respective data streams in IP format related to said radiotelevision programs or services;
- de-encapsulating said data streams in IP format and obtaining respective MPEG data streams (30,30') related to said radiotelevision programs or services;
- re-encoding said data streams as radiotelevision signals with appropriate modulation to be decoded by said DVBT/T2 receiver;
- inserting said radiotelevision signals with appropriate modulation into a channel belonging to said discontinued portion of the band;
- distributing said radiotelevision signals with appropriate modulation to said DVBT/T2 receiver via a coaxial cable distribution system (36).

2. Method according to claim 1, wherein said step of re-encoding said data streams as radiotelevision signals comprises the step of submitting said MPEG data streams (30, 30') to a multiplexer (26) which, by adding SI or PSI tables related to said radiotelevision programs or services, generates a transport stream (31) which is then sent to a CODFM encoder and modulator block (27) which codes said transport stream (31) and modulates it so as to obtain said radiotelevision signals with modulation appropriate to be received and decoded by terrestrial digital television decoders.

3. Method according to claim 1, wherein said browser (24) is operated remotely from said signal processing device (20) and/or said browser (24) is operated through the insertion of an authentication password.

4. Method according to claim 1, wherein the operation of said browser (36) is released by the user or automatically or after a predetermined time-out so as to make it available for selecting further IP addresses and/or
wherein at least one of said IP addresses allows access to pre-recorded or pay per view radiotelevision programs or services and/or
wherein the allocation of said radiotelevision programs or services in the channels is operated by a user of said receiver and/or
wherein said appropriate modulation is the COFDM modulation suitable for DVBT/T2 radiotelevision signals.

5. Signal processing device (20) for distributing radiotelevision signals of the terrestrial digital broadcasting DVBT/T2 type on a DVBT/T2 receiver, said radiotelevision signals comprising a plurality of radiotelevision programs or services, said DVBT/T2 receiver being capable of receiving said radiotelevision signals in at least a frequency band from 606 MHz to 862 MHz, wherein at least a portion of said frequency band has been discontinued for the radiotelevision signals of the terrestrial digital broadcasting type and assigned to a mobile telephony service, said discontinued portion of said frequency band being from 791 MHz to 862 MHz, comprising:
- means (23) for receiving Internet type signals containing said radiotelevision programs or services from which digital terrestrial television signals are derived and placed in channels belonging to said portion of said frequency band;
- means for selecting IP addresses via a respective browser (24), so as to obtain respective data streams (29) received in IP format related to said radiotelevision programs or services;
- means (25) for de-encapsulating said data streams (29) received in IP format and convert them in order to obtain respective MPEG data streams (30,30') related to said radiotelevision programs or services;
- means (26,31) for re-encoding said data streams as radiotelevision signals with modulation appropriate to be decoded by said DVBT/T2 receiver;
- means (28) for frequency allocating said radiotelevision signals (32) with appropriate modulation, only in the radiotelevision channels belonging to said discontinued portion of said frequency band;
- means for inserting said frequency-converted radiotelevision signals (33) with appropriate modulation into a channel belonging to said discontinued portion of said frequency band;
- means (34) for distributing said radiotelevision signals with appropriate modulation to said DVBT/T2 receiver via a coaxial cable distribution network (36).

6. Signal processing device (20) according to claim 5, wherein said means for reencoding said data streams as radiotelevision signals of the terrestrial digital broadcasting type comprise a multiplexer (26), to which said MPEG data streams (30,30') are fed, which, by adding SI or PSI tables related to said radiotelevision programs or services, generates a transport stream (31) and a CODFM encoder and modulator block (27) which codes said transport stream (31) and modulates it so as to obtain said radiotelevision signals of the terrestrial digital broadcasting type with appropriate modulation.

## Patentansprüche

1. Verfahren zum Empfangen von Rundfunksignalen vom terrestrischen digitalen Rundfunktyp DVBT/T2 auf einem DVBT/T2-Empfänger, wobei die Rundfunksignalen eine Vielzahl von Rundfunkfernsehprogrammen oder -Diensten beinhalten, wobei der DVBT/T2-Empfänger angepasst ist zum Empfangen der Rundfunksignalen zumindest in einem bestimmten Frequenzband von 606 MHz bis 862 MHz, wobei mindestens ein Teil des Frequenzbandes für die Rundfunksignale des terrestrischen digitalen Rundfunktyps eingestellt wurde und einem Mobiltelefondienst zugewiesen wurde, wobei der eingestellte Teil des Frequenzbands ist von 791 MHz bis 862 MHz, umfasst die Schritte:
- Empfangen von Signalen vom Internettyp, die die empfangbaren Rundfunkprogramme oder -Dienste enthalten, von denen Rundfunksignale vom terrestrischen digitalen Rundfunktyp abgeleitet werden, die in Fernsehkanälen platziert sind, die zu dem Teil des Frequenzbandes gehören;
- Verarbeiten von Signalen vom Internettyp (37), die die Rundfunkfernsehprogramme oder -Dienste enthalten, mittels einer Signalverarbeitungsvorrichtung (20), die die folgenden Schritte ausführt:
- Auswahl von IP-Adressen über einen entsprechenden Browser (24), um entsprechende Datenströme im IP-Format in Bezug auf Rundfunkfernsehprogramme oder -Dienste zu erhalten;
- Entkapselung der Datenströme im IP-Format und Erhalt entsprechender MPEG-Datenströme (30, 30 ') in Bezug auf die Rundfunkfernsehprogramme oder -dienste;
- Umcodieren der Datenströme als Rundfunksignale mit geeigneter Modulation um von dem DVBT/T2-Empfänger decodiert zu werden;
- Einfügen der Rundfunksignale mit geeigneter Modulation in einen Kanal, der zu einem Teil des Bandes gehört, der für den terrestrischen digitalen Rundfunk eingestellt wurde;
- Verteilen der Rundfunksignale mit geeigneter Modulation an den DVBT/T2-Empfänger über ein Koaxialkabelverteilungssystem (36).

2. Verfahren nach Anspruch 1, wobei der Schritt des Umcodierens der Datenströme als Rundfunksignale den Schritt des Übermittelns der MPEG-Datenströme (30,30') an einen Multiplexer (26) umfasst, der durch Hinzufügen von SI- oder PSI-Tabellen, die sich auf Rundfunkfernsehprogramme oder -Dienste beziehen, einen Transportstrom (31) erzeugt, der dann an einen CODFM-Codierer und Modulatorblock (27) gesendet wird, der den Transportstrom (31) codiert und so moduliert, um die Rundfunksignale mit einer für den Empfang geeigneten Modulation zu erhalten und von terrestrischen digitalen Fernsehdecodern zu decodieren.

3. Verfahren nach Anspruch 1, wobei der Browser (24) wird von der Signalverarbeitungsvorrichtung (20) ferngesteuert und/oder der Browser (24) durch Einfügen eines Authentifizierungskennworts betrieben wird.

4. Verfahren nach Anspruch 1, wobei der Betrieb des Browsers (36) vom Benutzer oder automatisch oder nach einer vorbestimmten Zeitüberschreitung freigegeben wird um es zum Auswählen weiterer IP-Adressen verfügbar zu machen und/oder
wobei mindestens eine der IP-Adressen den Zugriff auf aufgezeichnete oder Pay-per-View-Funkfernsehprogramme oder -Dienste ermöglicht und/oder
wobei die Zuordnung der Rundfunkfernsehprogramme oder -Dienste in den Kanälen von einem Benutzer des Empfängers betrieben wird und/oder
wobei die geeignete Modulation die COFDM-Modulation ist, die für DVBT/T2 Rundfunksignale geeignet ist.

5. Signalverarbeitungsvorrichtung (20) zum Ausstrahlen von Rundfunksignale vom terrestrischen digitalen Rundfunktyp DVBT/T2 auf einem DVBT/T2-Empfänger, wobei die Rundfunksignale eine Vielzahl von Rundfunkfernsehprogrammen oder -Diensten beinhalten, wobei der DVBT/T2-Empfänger angepasst ist zum Empfangen der Rundfunkfernsehsignalen zumindest in einem bestimmten Frequenzband von 606 MHz bis 862 MHz, wobei mindestens ein Teil des Frequenzbandes für die Rundfunksignale des terrestrischen digitalen Sendetyps eingestellt wurde und einem Mobiltelefondienst zugewiesen wurde, wobei der eingestellte Teil des Frequenzbands ist von 791 MHz bis 862 MHz, aufweisend:
- Mittel (23) zum Empfangen von Signalen vom Internettyp, die die Rundfunkfernsehprogramme oder -Dienste enthalten, von denen Rundfunksignale vom terrestrischen digitalen Rundfunktyp abgeleitet werden, und in die Fernsehkanäle platziert werden, die zu dem Teil des Frequenzbandes gehören;
- Mittel zum Auswählen von IP-Adressen über einen entsprechenden Browser (24), um entsprechende Datenströme (29) zu erhalten, die im IP-Format relativ zu den Rundfunkfernsehprogrammen oder -Diensten empfangen werden;
- Mittel (25) zum Entkapseln der im IP-Format empfangenen Datenströme (29) und zum Konvertieren dieser Daten, um entsprechende MPEG-Datenströme (30,30') zu erhalten, die sich auf die Rundfunkfernsehprogramme oder-Dienste beziehen;
- Mittel (26,31) zum Umcodieren der Datenströme als Rundfunksignale mit einer Modulation, die geeignet ist, von dem DVBT/T2-Empfänger decodiert zu werden;
- Mittel (28) zum Frequenzzuweisen der Rundfunksignale (32) mit geeigneter Modulation nur in den Rundfunkfernsehkanälen, die zu dem eingestellten Teil des Frequenzbandes gehören;
- Mittel zum Einfügen der frequenzumgewandelten Rundfunksignale (33) mit geeigneter Modulation in einen Kanal, der zu dem eingestellten Teil des Frequenzbandes gehört;
- Mittel (34) zum Ausstrahlen der Rundfunksignale mit geeigneter Modulation an den DVBT/T2-Empfänger über ein Koaxialkabelverteilungsnetz (36).

6. Signalverarbeitungsvorrichtung (20) nach Anspruch 5, wobei die Mittel zum Umcodieren der Datenströme als Rundfunksignale des terrestrischen digitalen Rundfunktyps einen Multiplexer (26) aufweist, zu dem die MPEG-Datenströme (30,30') gespeist werden, die durch Hinzufügen von SI- oder PSI-Tabellen, die sich auf die Rundfunkfernsehprogramme oder -Dienste beziehen, einen Transportstrom (31) erzeugt und ein CODFM-Codierer und ein Modulatorblock (27), welcher den Transportstrom (31) codiert und so moduliert, um die Rundfunkfernsehsignale vom terrestrischen digitalen Rundfunktyp mit geeigneter Modulation zu erhalten.

## Revendications

1. Procédé de réception de signaux de radiotélévision du type radiodiffusion numérique terrestre DVBT/T2 sur un récepteur DVBT/T2, lesdits signaux de radiotélévision comprenant une pluralité de programmes ou de services de radiotélévision, ledit récepteur DVBT/T2 étant capable de recevoir lesdits signaux de radiotélévision dans au moins une bande de fréquence de 606 MHz à 862 MHz, dans lequel au moins une portion de ladite bande de fréquence a été interrompue pour les signaux de radiotélévision du type radiodiffusion numérique terrestre et attribuée à un service de téléphonie mobile, ladite portion interrompue de ladite bande de fréquence étant de 791 MHz à 862 MHz, comprenant les étapes de :
- réception de signaux de type Internet contenant lesdits programmes ou services de radiotélévision dont des signaux de radiotélévision du type radiodiffusion numérique terrestre sont dérivés, qui sont placés dans des canaux de télévision appartenant à ladite portion de ladite bande de fréquence ;
- traitement desdits signaux de type Internet (37) contenant lesdits programmes ou services de radiotélévision au moyen d'un dispositif de traitement de signaux (20) qui réalise les étapes de :
- sélection d'adresses IP via un navigateur (24) respectif, de façon à obtenir des flux de données respectifs en format IP liés auxdits programmes ou services de radiotélévision ;
- désencapsulation desdits flux de données en format IP et obtention de flux de données MPEG (30, 30') respectifs liés auxdits programmes ou services de radiotélévision ;
- réencodage desdits flux de données en tant que signaux de radiotélévision avec une modulation appropriée pour être décodés par ledit récepteur DVBT/T2 ;
- insertion desdits signaux de radiotélévision avec une modulation appropriée dans un canal appartenant à ladite portion interrompue de la bande ;
- distribution desdits signaux de radiotélévision avec une modulation appropriée audit récepteur DVBT/T2 via un système de distribution par câble coaxial (36).

2. Procédé selon la revendication 1, dans lequel ladite étape de réencodage desdits flux de données en tant que signaux de radiotélévision comprend l'étape de soumission desdits flux de données MPEG (30, 30') à un multiplexeur (26) qui, par ajout de tables SI ou PSI liées auxdits programmes ou services de radiotélévision, génère un flux de transport (31) qui est ensuite envoyé à un bloc encodeur et modulateur CODFM (27) qui code ledit flux de transport (31) et le module de façon à obtenir lesdits signaux de radiotélévision avec une modulation appropriée pour être reçu et décodé par des décodeurs de télévision numérique terrestre.

3. Procédé selon la revendication 1, dans lequel ledit navigateur (24) est activé à distance dudit dispositif de traitement de signaux (20) et/ou ledit navigateur (24) est activé par l'insertion d'un mot de passe d'authentification.

4. Procédé selon la revendication 1, dans lequel l'activation dudit navigateur (36) est libérée par l'utilisateur soit automatiquement soit après un délai d'attente prédéterminé de façon à le rendre disponible pour sélectionner des adresses IP supplémentaires et/ou
dans lequel au moins l'une desdites adresses IP autorise un accès à des programmes ou services de radiotélévision préenregistrés ou à la carte et/ou
dans lequel l'allocation desdits programmes ou services de radiotélévision dans les canaux est activée par un utilisateur dudit récepteur et/ou
dans lequel ladite modulation appropriée est la modulation COFDM appropriée pour des signaux de radiotélévision DVBT/T2.

5. Dispositif de traitement de signaux (20) pour distribuer des signaux de radiotélévision du type radiodiffusion numérique terrestre DVBT/T2 sur un récepteur DVBT/T2, lesdits signaux de radiotélévision comprenant une pluralité de programmes ou de services de radiotélévision, ledit récepteur DVBT/T2 étant capable de recevoir lesdits signaux de radiotélévision dans au moins une bande de fréquence de 606 MHz à 862 MHz, dans lequel au moins une portion de ladite bande de fréquence a été interrompue pour les signaux de radiotélévision du type radiodiffusion numérique terrestre et attribuée à un service de téléphonie mobile, ladite portion interrompue de ladite bande de fréquence étant de 791 MHz à 862 MHz, comprenant :
- des moyens (23) pour recevoir des signaux de type Internet contenant lesdits programmes ou services de radiotélévision dont des signaux de télévision terrestre numérique sont dérivés et placés dans des canaux appartenant à ladite portion de ladite bande de fréquence ;
- des moyens pour sélectionner des adresses IP via un navigateur (24) respectif, de façon à obtenir des flux de données (29) respectifs reçus en format IP liés auxdits programmes ou services de radiotélévision ;
- des moyens (25) pour désencapsuler lesdits flux de données (29) reçus en format IP et les convertir afin d'obtenir des flux de données MPEG (30, 30') respectifs liés auxdits programmes ou services de radiotélévision ;
- des moyens (26, 31) pour réencoder lesdits flux de données en tant que signaux de radiotélévision avec une modulation appropriée pour être décodés par ledit récepteur DVBT/T2 ;
- des moyens (28) pour allouer une fréquence auxdits signaux de radiotélévision (32) avec une modulation appropriée, uniquement dans les canaux de radiotélévision appartenant à ladite portion interrompue de ladite bande de fréquence ;
- des moyens pour insérer lesdits signaux de radiotélévision à conversion de fréquence (33) avec une modulation appropriée dans un canal appartenant à ladite portion interrompue de ladite bande de fréquence ;
- des moyens (34) pour distribuer lesdits signaux de radiotélévision avec une modulation appropriée audit récepteur DVBT/T2 via un réseau de distribution par câble coaxial (36).

6. Dispositif de traitement de signaux (20) selon la revendication 5, dans lequel lesdits moyens pour réencoder lesdits flux de données en tant que signaux de radiotélévision du type radiodiffusion numérique terrestre comprennent un multiplexeur (26), auquel lesdits flux de données MPEG (30, 30') sont fournis, qui, par ajout de tables SI ou PSI liées auxdits programmes ou services de radiotélévision, génère un flux de transport (31) et un bloc modulateur et encodeur CODFM (27) qui code ledit flux de transport (31) et le module de façon à obtenir lesdits signaux de radiotélévision du type radiodiffusion numérique terrestre avec une modulation appropriée.
